# EUROPEAN PATENT APPLICATION

(11) **EP 4 852 388 A1**
(43) Date of publication of application: **09.12.2026**
(21) Application number: 24921830.6
(22) Date of filing: 31.12.2024
(51) Int. Cl.: H04L 41/14

(54) **MODEL INFORMATION TRANSMISSION METHOD AND APPARATUS**

(30) Priority: 01.02.2024 CN 202410145603
(71) Applicant: Datang Mobile Communications Equipment Co., Ltd., Beijing 100085 (CN)
(72) Inventor: FEI, Yongqiang, Beijing 100085 (CN); ZUO, Jun, Beijing 100085 (CN); GAO, Qiubin, Beijing 100085 (CN)
(74) Representative: Maiwald GmbH
(86) International application number: PCT/CN2024/144238
(87) International publication number: WO 2025/161808

(57) **Abstract**

The present disclosure provides a model information transferring method and device to solve the problem of how to ensure that UE can use the AI/ML model transferred by the network. The method in one embodiment of the present disclosure includes: sending model indication information, where the model indication information is used to indicate artificial intelligence or machine learning (AI/ML) model structure supported by a user equipment (UE). The model indication information enables the network side device to know the AI/ML model structure supported by the UE, so that the network side device can subsequently transfer a model of the AI/ML model structure supported by the UE to the UE, thereby enabling the UE to use the AI/ML model transferred by the network side device.

## Description

The present disclosure is filed based on and claims the priority of Chinese Application No. 202410145603.4 filed on February 1, 2024 and entitled "model information transfer method and device", the disclosure of which are incorporated in their entireties by reference herein.

### TECHNICAL FIELD

The present disclosure relates to the field of communication technologies, and in particular, to a model information transfer method and device.

### BACKGROUND

With development of artificial intelligence (AI) and machine learning (ML), in the related art, AI/ML models are used to improve performance of communication systems. In Rel-18 New Radio (NR), operation methods based on AI/ML models or AI/ML functions are researched; and in Rel-19 NR, the air interface support for AI/ML is to be standardized. In some cases, network (NW) needs to transfer/deliver the AI/ML model to a user equipment (UE) so that the UE can use the model provided by the NW for reasoning. However, the support of one UE for AI/ML models is limited. If the UE cannot support the model structure transferred by the NW, the UE cannot use the model transferred by the NW.

### SUMMARY

An object of the present disclosure is to provide a model information transferring method and device, which can solve the problem of how to ensure that UE can use the AI/ML model transferred by the network.

In order to achieve the above object, the present disclosure provides a model information transferring method, applied to a UE, including:
sending model indication information, wherein the model indication information is used to indicate an artificial intelligence or machine learning (AI/ML) model structure supported by the UE.

In some embodiments, the model indication information includes at least one of the following:
model identifier;
meta information of the model, wherein the meta information is description information of the model and includes model structure information and/or model structure identifier;
model structure identifier;
model structure information;
AI/ML reference model.

In some embodiments, before sending model indication information, the method further includes:
obtaining candidate model information sent by a network side device, wherein the candidate model information includes at least one of a model identifier, meta information, a model structure identifier and model structure information of at least one candidate AI/ML model, and/or includes at least one candidate AI/ML reference model;
selecting, in the candidate model information, the candidate model information corresponding to the AI/ML model supported by the UE, as the model indication information.

In some embodiments, the model structure information indicates at least one of the following:
type, layer number, node number, connection mode between layers, and connection mode between nodes.

In some embodiments, the model identifier carries model structure information;
or, there is a corresponding relationship between the model identifier and the model structure information.

In some embodiments, different fields or different domains or different sub-IDs in the model identifier are used to indicate different structural parameters in the model structure information;
or, a specific field or a specific domain or a specific sub-ID in the model identifier is used to indicate a combination of structural parameters in the model structure information.

In some embodiments, the model structure identifier carries model structure information;
or, there is a corresponding relationship between the model structure identifier and the model structure information.

In some embodiments, different fields or different domains or different sub-IDs in the model structure identifier are used to indicate different structural parameters in the model structure information;
or, a specific field or a specific domain or a specific sub-ID in the model structure identifier is used to indicate a combination of structure parameters in the model structure information.

In some embodiments, after sending model indication information, the method further includes:
obtaining a target AI/ML model transferred by the network side device, wherein a structure of the target AI/ML model is an AI/ML model structure supported by the UE.

One embodiment of the present disclosure further provides a model information transferring method, applied to a network side device, including:
obtaining model indication information, wherein the model indication information is used to indicate an artificial intelligence or machine learning (AI/ML) model structure supported by the UE;
determining AI/ML model structure supported by the UE according to the model indication information.

In some embodiments, the model indication information includes at least one of the following:
model identifier;
meta information of the model, wherein the meta information is description information of the model and includes model structure information and/or model structure identifier;
model structure identifier;
model structure information;
AI/ML reference model.

In some embodiments, the method further includes:
sending candidate model information to the UE, wherein the candidate model information includes at least one of a model identifier, meta information, a model structure identifier, and model structure information of at least one candidate AI/ML model, and/or includes at least one candidate AI/ML reference model.

In some embodiments, the model structure information indicates at least one of the following:
type, layer number, node number, connection mode between layers, and connection mode between nodes.

In some embodiments, the model identifier carries model structure information;
or, there is a corresponding relationship between the model identifier and the model structure information.

In some embodiments, different fields or different domains or different sub-IDs in the model identifier are used to indicate different structural parameters in the model structure information;
or, a specific field or a specific domain or a specific sub-ID in the model identifier is used to indicate a combination of structural parameters in the model structure information.

In some embodiments, the model structure identifier carries model structure information;
or, there is a corresponding relationship between the model structure identifier and the model structure information.

In some embodiments, different fields or different domains or different sub-IDs in the model structure identifier are used to indicate different structural parameters in the model structure information;
or, a specific field or a specific domain or a specific sub-ID in the model structure identifier is used to indicate a combination of structure parameters in the model structure information.

In some embodiments, the method further includes:
sending a target AI/ML model to the UE, wherein a structure of the target AI/ML model is a structure of the AI/ML model supported by the UE.

One embodiment of the present disclosure further provides a model information transferring device, including: a memory, a transceiver, and a processor;
wherein the memory is used to store a computer program; the transceiver is used to send and receive data under control of the processor; and the processor is used to read the computer program in the memory and perform the following operations:
sending model indication information, wherein the model indication information is used to indicate an artificial intelligence or machine learning (AI/ML) model structure supported by the UE.

One embodiment of the present disclosure further provides a model information transferring device, including: a memory, a transceiver, and a processor;
wherein the memory is used to store a computer program; the transceiver is sued to send and receive data under control of the processor; and the processor is used to read the computer program in the memory and perform the following operations:
obtaining model indication information, wherein the model indication information is used to indicate an artificial intelligence or machine learning (AI/ML) model structure supported by the UE;
determining AI/ML model structure supported by the UE according to the model indication information.

One embodiment of the present disclosure further provides a model information transferring device, including:
a first sending unit configured to send model indication information, wherein the model indication information is used to indicate an artificial intelligence or machine learning (AI/ML) model structure supported by the UE.

One embodiment of the present disclosure further provides a model information transferring device, including:
a first obtaining unit configured to obtain model indication information, wherein the model indication information is used to indicate an artificial intelligence or machine learning (AI/ML) model structure supported by the UE;
a determination unit configured to determine AI/ML model structure supported by the UE according to the model indication information.

One embodiment of the present disclosure further provides a processor-readable storage medium, including a computer program stored thereon; wherein the computer program is used to causes a processor to perform steps of the above model information transferring method.

One embodiment of the present disclosure further provides a computer program product, including computer instructions; wherein the computer instructions, when executed by a processor, causes the processor to perform steps of the above model information transferring method.

The above technical solution of the present disclosure has at least the following beneficial effects.

In the embodiment of the present disclosure, model indication information is sent, and the model indication information is used to indicate the artificial intelligence or machine learning (AI/ML) model structure supported by the UE. The model indication information enables the network side device to know the AI/ML model structure supported by the UE, so that the network side device can subsequently transfer a model of the AI/ML model structure supported by the UE to the UE, thereby enabling the UE to use the AI/ML model transferred by the network side device.

### BRIEF DESCRIPTION OF THE DRAWINGS

FIG. 1 shows a first structural diagram of a network system to which embodiments of the present disclosure can be applied;
FIG. 2 is a first schematic flowchart of a model information transferring method according to an embodiment of the present disclosure;
FIG. 3 shows a second structural diagram of a network system to which embodiments of the present disclosure can be applied;
FIG. 4 is a first schematic diagram showing interaction of a model information transferring method according to an embodiment of the present disclosure;
FIG. 5 is a second schematic diagram showing interaction of a model information transferring method according to an embodiment of the present disclosure;
FIG. 6 is a third schematic diagram showing interaction of a model information transferring method according to an embodiment of the present disclosure;
FIG. 7 is a fourth schematic diagram showing interaction of a model information transferring method according to an embodiment of the present disclosure;
FIG. 8 is a second schematic flowchart of a model information transferring method according to an embodiment of the present disclosure;
FIG. 9 is a first schematic block diagram of a model information transferring device according to an embodiment of the present disclosure;
FIG. 10 is a second schematic block diagram of a model information transferring device according to an embodiment of the present disclosure;
FIG. 11 is a first schematic diagram showing modules of a model information transferring device according to an embodiment of the present disclosure; and
FIG. 12 is a second schematic diagram showing modules of a model information transferring device according to an embodiment of the present disclosure.

### DETAILED DESCRIPTION

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

The terms "first" and "second", etc. in the specification and claims of the present disclosure are used to distinguish similar objects rather than to describe a specific order or sequence. It is to be understood that data used in this way can be interchanged where appropriate, so that the embodiments of the present disclosure described herein, for example, are implemented in a sequence other than those illustrated or described herein. In addition, the terms "including" and "having" and any of their variations are intended to cover non-exclusive inclusions, for example, a process, method, system, product or equipment including a series of steps or units needs not be limited to those steps or units clearly listed, but may include other steps or units that are not clearly listed or inherent to the process, method, product or equipment.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "/" generally means that relationship between associated objects before and after the character "/" is "or". The term "plurality" in the embodiments of the present disclosure means two or more, and other quantifiers are similar.

In the embodiments of the present disclosure, the terms such as "exemplary" or "for example" are used to indicate examples, illustrations or descriptions. Any embodiment or design described as "exemplary" or "for example" in the embodiments of the present disclosure should not be interpreted as being more preferred or more advantageous than other embodiments or designs. Specifically, the use of terms such as "exemplary" or "for example" is intended to present related concepts in a specific way.

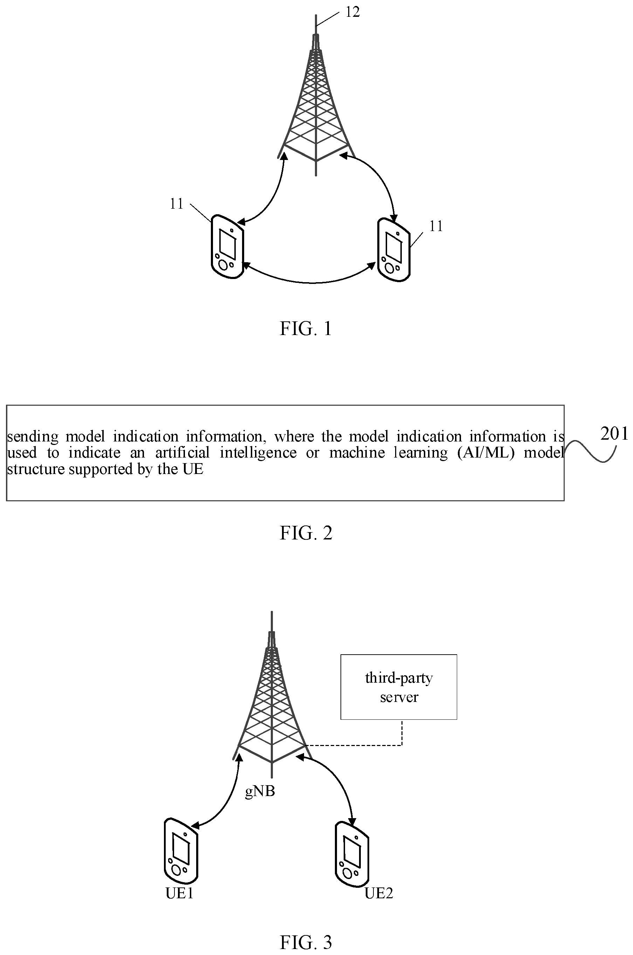

FIG. 1 shows a block diagram of a wireless communication system applicable to an embodiment of the present disclosure. The wireless communication system includes a terminal device 11 and a network side device (or network device) 12. The terminal device 11 may also be referred to as a terminal or a user equipment (UE). It is to be noted that the specific type of the terminal 11 is not limited in the embodiment of the present disclosure. The network side device 12 may be a base station or a core network. It is to be noted that in the embodiment of the present disclosure, a base station in the NR system is only taken as an example, but the specific type of the base station is not limited.

In order to enable those skilled in the art to better understand the embodiments of the present disclosure, the following description is first provided.

In the present disclosure, model generally refers to AI/ML model. The AI/ML model is a data-driven algorithm that can infer and predict output based on certain input. The AI/ML model may be a unilateral model, that is, the model is deployed only on one side, such as network (NW) side or UE side; or bilateral models, that is, models are deployed on the NW and UE sides, and cooperation between both sides is required for complete reasoning. In the present disclosure, functionality generally refers to AI/ML functionality. The AI/ML functionality often refers to AI/ML capabilities that the UE side can have. UE with AI/ML capabilities can perform reasoning, and NW does not need to identify which AI/ML models the UE has or which models the UE uses.

In some cases, the NW needs to transfer/deliver (hereinafter "transfer" or "transferring" mainly refers to "transfer/deliver") AI/ML models to UE, so that the UE can use the model provided by the NW for reasoning. For example, the NW has trained an AI/ML model that is particularly suitable for use in one cell based on data collected in this cell, and it is beneficial for the UE to use this model. However, generally speaking, one UE can only support specific AI/ML model structures, depending on capabilities of each UE. Therefore, one UE's support for AI/ML models is limited. If the UE cannot support the model structure transferred by the NW, the UE cannot use the model transferred by the NW.

Regarding transferring AI/ML models from NW to UE, in the related art, it is considered that transferring a model with a "known structure" to the UE is a more feasible solution than transferring a model with an "unknown structure".

The so-called "known structure" is defined as "a structure that has been recognized by the NW and the UE, and is a structure that the UE explicitly supports". Therefore, when the NW transfers a model to the UE, the "known structure" can be understood as "a model structure that is known to be supported by the UE and recognized by both the UE and the NW".

When the NW transfers a model of a known structure to the UE, the structure of the model should be the same as structures of a model that has been previously recognized by the NW and the UE.

The concept of "model recognition" is involved in related art. The process of model recognition can be understood as enabling multiple parties to align their understanding of the same model through interaction of AI/ML model's meta information.

The model information transferring method provided in the embodiment of the present disclosure is described in detail hereinafter through some embodimentss and their application scenarios in combination with the accompanying drawings.

As shown in FIG. 2, one embodiment of the present disclosure provides a model information transferring method, which is applied to a UE. The method includes:

Step 201: sending model indication information, where the model indication information is used to indicate an artificial intelligence or machine learning (AI/ML) model structure supported by the UE.

In one embodiment of the present disclosure, the above model indication information may directly indicate the AI/ML model structure supported by the UE, for example, directly indicating model structure information of the AI/ML model supported by the UE, or may indirectly indicate the AI/ML model structure supported by the UE, for example, indirectly indicating the AI/ML model structure supported by the UE by indicating the AI/ML model supported by the UE, for another example, indirectly indicating the AI/ML model structure supported by the UE by indicating an identifier of an AI/ML model or an identifier of an AI/ML model structure supported by the UE or by indicating a reference AI/ML model.

By sending the model indication information, the network side device can identify the AI/ML model structure supported by the UE, so that the NW can transfer a model of the AI/ML model structure supported by the UE, reducing the complexity of the UE and making it possible for the NW to transfer the AI/ML model to the UE, which allows the UE to use the AI/ML model trained by the NW and adapted to the NW environment, thereby improving the performance of the communication system.

In the embodiment of the present disclosure, the UE sends model indication information, and the model indication information is used to indicate the artificial intelligence or machine learning (AI/ML) model structure supported by the UE. The model indication information enables the network side device to know the AI/ML model structure supported by the UE, so that the network side device can subsequently transfer a model of the AI/ML model structure supported by the UE to the UE, thereby enabling the UE to use the AI/ML model transferred by the network side device.

In some embodiments, the model indication information includes at least one of the following items.

First item: model identifier.

In some embodiments, a model corresponding to the model identifier is a model that has been identified by the network side device.

In some embodiments, there is a corresponding relationship between the model identifier and the model structure.

As an implementation mode, the model structure corresponding to the above model identifier is predefined by the protocol, or is determined by other means (such as indicated by the network side device or determined by negotiation between manufacturers), which is not specifically limited in the present disclosure.

The second item: meta information of the model. The meta information is description information of the model and includes model structure information and/or model structure identifier.

In some embodiments, the meta information may include other information in addition to the model structure information and/or the model structure identifier.

In one embodiment of the present disclosure, the UE may initiate a model identification procedure, and a model identified in the model identification procedure is a model supported by the UE. Specifically, when the UE performs model identification, the UE reports description information related to the model, that is, the meta information of the model, to the network side device, so that the network side device can know the AI/ML model structure supported by the UE based on the meta information.

Third item: model structure identifier.

In some embodiments, there is a corresponding relationship between the model structure identifier and the model structure.

In some embodiments, the model structure corresponding to the model structure identifier is predefined by a protocol, or is determined by an agreement between manufacturers, or is indicated by a network side device.

Fourth item: model structure information.

The model structure information indicates at least one of the following items:

Type, layer number, node number, connection method between layers, and connection method between nodes.

The above model structure information may indicate at least one of the above items in an explicit or implicit manner.

Fifth item: AI/ML reference model.

In some embodiments, the model structure of the AI/ML reference model is a model structure supported by the UE, or the AI/ML reference model is a model supported by the UE.

By transferring the AI/ML reference model, the network side device can determine the AI/ML reference model structure supported by the UE based on the AI/ML reference model.

In some embodiments, before sending the model indication information, the method further includes:
obtaining candidate model information sent by a network side device, where the candidate model information includes at least one of a model identifier, meta information, a model structure identifier and model structure information of at least one candidate AI/ML model, and/or includes at least one candidate AI/ML reference model.

In the candidate model information, the candidate model information corresponding to the AI/ML model supported by the UE is selected as the model indication information.

In some embodiments, the above model structure identifier, model structure information and/or meta information may also be described as AI/ML model structure candidate information.

In the embodiment of the present disclosure, the UE can directly send model indication information to the network side device; or the UE can first obtain candidate model information sent by the network side device, determine the model indication information based on the candidate model information, and then send the model indication information to the network side device.

In some embodiments, the model identifier carries model structure information.

Alternatively, there is a corresponding relationship between the model identifier and the model structure information.

As an implementation manner, different fields or different domains or different sub-IDs in the model identifier are used to indicate different structural parameters in the model structure information; in some embodiments, there is no overlap between different fields.

Alternatively, a specific field or a specific domain or a specific sub-ID in the model identifier is used to indicate a combination of structural parameters in the model structure information.

For example, a field 1 of a model ID indicates a connection mode of the model, a field 2 of the model ID indicates a layer number, and fields 3, 4, 5,... of the model ID indicate the node numbers of first, second, third... layers.

For example, the combination of structural parameters may be {convolutional neural network (CNN), convolution kernel size, layer number, node number per layer, pooling method,...}, or, {fully connected neural network (FCNN), layer number, node number in the first layer, node number in the second layer, node number in the third layer...}.

In some embodiments, the model structure identifier carries model structure information.

Alternatively, there is a corresponding relationship between the model structure identifier and the model structure information.

As an implementation manner, different fields or different domains or different sub-IDs in the model structure identifier are used to indicate different structural parameters in the model structure information.

Alternatively, a specific field or a specific domain or a specific sub-ID in the model structure identifier is used to indicate a combination of structural parameters in the model structure information.

Exemplarily, a field X of the model structure identifier (ID) indicates a connection mode between layers, and a field X+Y of the model structure ID indicates a connection mode between nodes, where X and Y are integers respectively.

Exemplarily, the combination of structural parameters may be {CNN, convolution kernel size, layer number, node number per layer, pooling method,...}, or, {FCNN, layer number, node number in the first layer, node number in the second layer, node number in the third layer...}.

In some embodiments, after sending the model indication information, the method further includes:
obtaining a target AI/ML model transferred by the network side device, where a structure of the target AI/ML model is an AI/ML model structure supported by the UE.

Here, the network side device transfers the above target AI/ML model to the UE, so that the UE can use the AI/ML model trained by the NW and adapted to the NW environment, thereby improving the performance of the communication system.

The model information transferring method of the present disclosure is described hereinafter in conjunction with embodiments.

The present disclosure is mainly applied to a 5G NR system, which includes a network side device and a UE; the present disclosure can also be applied to other systems, as long as the system requires NW to determine the AI/ML model structure supported by UE, the solution of the present disclosure can be applied.

FIG. 3 illustrates an applicable scenario of the present disclosure. Multiple UEs, including UE1 and UE2, apply for radio network connection services. The network side device provides radio services for them. The network side device may be a next generation Node B (gNB), a transmission-reception point (TRP), a location management function (LMF), etc. The network side device and UE1 and UE2 interact and transmit data through wireless communication. For example, gNB provides AI/ML-related services to UE1 and UE2, including transferring AI/ML models to UE1 and UE2. In addition, a third-party server and gNB may be connected by wire and interact with information, or interact with gNB through UE. The third-party server may be an over the top (OTT) server or an AI/ML model provider.

### First embodiment

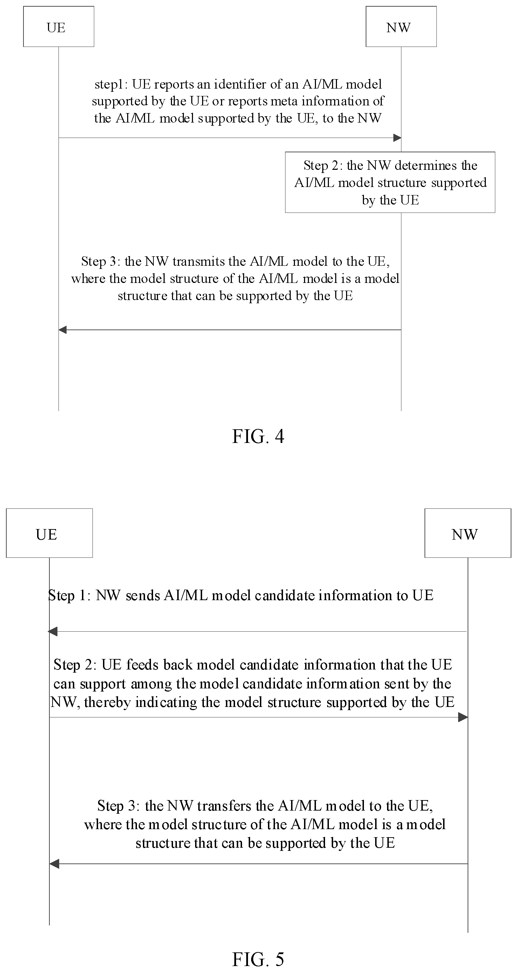

As shown in FIG. 4, the method includes:
Step 1: the UE reports an identifier of an AI/ML model supported by the UE or reports meta information of the AI/ML model supported by the UE, to the NW.

In some embodiments, the UE may report to the NW, the identifier of at least one AI/ML model supported by the UE, or report meta information of at least one AI/ML model supported by the UE.

First implementation mode: the UE reports a model identifier (model ID) of a supported model, and the model is a model that the NW has identified.

In some embodiments, the model ID is an index value identifying the model. For the identified models, AI/ML models corresponding to the same model ID are the same.

An identified AI/ML model may be: a model that the UE has previously initiated and completed model identification; a model that other UE has previously initiated and completed model identification; or a model that a third-party server has previously initiated and completed model identification.

Second implementation mode: the UE initiates model identification, and an identified model is a model supported by the UE; when performing model identification, the UE reports relevant description information of the model, i.e., meta information of the model, to the NW.

In this implementation mode, the model identified by model identification initiated by the UE is an AI/ML model supported by the UE, so the UE also supports the model structure of the AI/ML model.

The meta information of the model includes information related to the model structure, which is specifically refered to the following method 1 of the step 2.

Step 2: the NW determines the AI/ML model structure supported by the UE.

Specifically, the AI/ML model structure supported by the UE is determined by at least one of the following methods.

Method 1: the meta information of the AI/ML model includes model structure information of the AI/ML model.

The model structure information is used to determine AI/ML model structure, which includes at least one of the following information (part or all of a model):
type of model structure; for example, fully connected structure, convolutional neural network structure, residual neural network structure, etc.;
layer number; for example, the layer number is 2, 3, 4 layers...;
node number; for example, the node number in common for each layer, or a list of node numbers, a list length can be the same as the layer number, and each item in the list indicates the node number in each layer;
connection mode between layers; for example, whether an N-th layer is connected to a (N+1)-th layer and the (N+1)-th layer is connected to a (N+2)-th layer, or whether the N-th layer is connected to the (N+1)-th and (N+2)-th layer, the (N+1)-th layer is connected to a (N+2)-th and (N+3)_th layers, etc., where N is an integer;
connection mode between nodes; for example, whether each node of the N-th layer is connected to each node of a layer connected to the (N+m)-th layer, or a node with an index k in the N-th layer is connected to a node with an index *f_{N}*(*k*) in a connected the (N+m)-th layer, where *f_{N}*(*k*) is a formula predefined or indicated by NW that can uniquely determine a set of node indices connected to the k-th node of the N-th layer, where m is an integer.

Method 2: Model ID of the AI/ML model; wherein the model ID partially or completely carries information that can represent a model structure of the AI/ML model.

Option 1: different fields/domains/sub-IDs in the ID indicate different model structure parameters; for example:
field 1 of the model ID indicates connection mode of the model;
field 2 of the model ID indicates the layer number;
fields 3, 4, 5,... of the model ID indicate the node numbers in the 1st, 2nd, 3rd,... layers;
field X of the model ID indicates a connection mode between layers, and X is an integer;
field X+Y of the model ID indicates a connection mode between nodes, and both X and Y are integers.

Option 2: a specific field/domain/sub-ID in the ID indicates a combination of structural parameters used to determine the model structure; an example of a combination of structural parameters may be a parameter combination of {structure type, parameter 1, parameter 2...}, and the relevant parameters for different structure types are different, for example: {CNN, convolution kernel size, layer number, node number per layer, pooling method,...}, or {FCNN, layer number, node number in the first layer, node number in the second layer, node number in the third layer...}.

The model structure corresponding to the above model ID is predefined by the protocol or determined by other means (such as negotiation between manufacturers).

Method 3: the UE transfers a reference model to the NW, where the model structure of the reference model is a model structure supported by the UE, or the reference model is a model supportable by the UE.

The reference model is used to allow the NW to determine the model structure that the UE can support

In some embodiments, the reference model transferred by the UE to the NW may also meet one or more of the following features:
Feature 1: the model is an "empty model", for example, it only has hyper parameters but no specific parameter values.

It is to be noted that the hyper parameters are parameters whose values are set before starting the learning process, such as the layer number, node number, learning rate, etc. of the model, while the parameters are data obtained through training, such as weight coefficients multiplied when transferring data between nodes.

Feature 2: meta information of the model is also transmitted, but the meta information does not include one of the following indication information, or the meta information includes the following indication information but some or all of values of these indication information are null values, or indications of these indication information are all or partly invalid/ineffective: performance indication information, usage indication information, applicable condition indication information, etc.

Feature 3: model format indication information is also transmitted, and the model format indication information is used to indicate a format of description of the reference model, so that a receiver of the reference model can interpret and understand the reference model; illustratively, the format can be a public format or a private format known to the receiver of the reference model, for example, the public format can be ".pb" format, ".h5" format, or "ONNX" format, etc. In addition, model format version information can also be included.

Step 3: the NW transmits the AI/ML model (i.e., the target AI/ML model) to the UE. The model structure of the AI/ML model is a model structure that can be supported by the UE.

In some embodiments, before the NW transmits the AI/ML model to the UE, model identification from the NW to the UE is also initiated, and the model identification from the NW to the UE at least indicates applicable conditions of the AI/ML model transferred by the NW to the UE.

### Second embodiment

As shown in FIG. 5, the method includes:
Step 1: NW sends AI/ML candidate model information to UE.

Implementation mode 1: the AI/ML candidate model information is meta information of the candidate AI/ML model, and the meta information of the model includes model structure information of the AI/ML model.

The model structure indicated by the meta information is specifically shown in the first embodiment.

Implementation mode 2: the candidate model information is a model ID; where the model ID partially or completely carries information that can represent the model structure of the AI/ML model.

The model structure indicated by the model ID is shown in the first embodiment.

Implementation mode 3: the candidate model information is a candidate AI/ML reference model, and the candidate AI/ML reference model is used to allow the UE to determine which models it supports and determine which candidate model structure it supports.

A detailed introduction to the reference model refers to the first embodiment.

Step 2: the UE feeds back candidate model information that the UE can support among the candidate model information sent by the NW, thereby indicating the model structure supported by the UE.

For example, a supported model can be fed back as a model ID in the candidate model information, or an index corresponding to a supported model in the candidate model list can be fed back.

Here, it is possible that the UE does not support the model structure corresponding to any candidate model information, and the UE then feeds back that it does not support any candidate model information, thereby indicating that the UE does not support the model structure corresponding to all candidate model information. In this case, the NW does not perform the following step 3.

Step 3: the NW transfers the AI/ML model (i.e., the target AI/ML model) to the UE. The model structure of the AI/ML model is a model structure that can be supported by the UE.

In some embodiments, before the NW transfers the AI/ML model to the UE, model identification from the NW to the UE is also initiated, and the model identification from the NW to the UE at least indicates applicable conditions of the AI/ML model transferred by the NW to the UE.

### Third embodiment

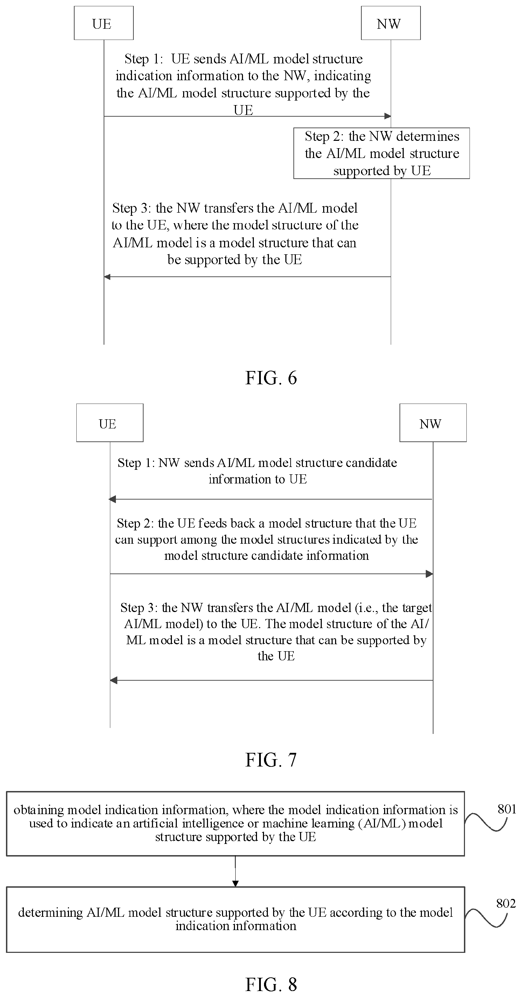

As shown in FIG. 6, the method includes:
Step 1: the UE sends AI/ML model structure indication information to the NW, indicating the AI/ML model structure supported by the UE.

The AI/ML model structure indication information indicates at least one AI/ML model structure supported by the UE.

Implementation mode 1: the model structure indication information indicates structural information of the model, which at least indicates model type, the layer number/node number, and/or connection mode between layers, and/or connection mode between nodes, which specifically refers to the first embodiment.

Implementation mode 2: the model structure indication information is an ID of the AI/ML model structure. The model structure corresponding to the ID is predefined by the protocol, or is determined by negotiation between manufacturers, or is indicated by the NW. The method for the ID of the model structure to indicate the model structure refers to the method for indicating the model structure by "partial field/domain/sub-ID of the model ID" in the first embodiment, which will not be repeated here.

Step 2: the NW determines the AI/ML model structure supported by UE.

In this embodiment, the NW can determine the model structure supported by the UE according to the model structure indication information in the step 1.

Step 3: the NW transfers the AI/ML model (i.e., the target AI/ML model) to the UE. The model structure of the AI/ML model is a model structure that can be supported by the UE.

In some embodiments, before the NW transfers the AI/ML model to the UE, model identification from the NW to the UE is also initiated, and the model identification from the NW to the UE at least indicates applicable conditions of the AI/ML model transferred by the NW to the UE.

It is to be noted that this embodiment is similar to the first embodiment, except that the information reported by the UE only includes the indication information of the model structure, thereby reducing overhead of reporting redundant information; if the meta information of a model includes the model structure indication information, it can be considered that the UE may not report other information in the meta information except the model structure indication information, or may only report it optionally rather than compulsorily.

### Fourth embodiment

As shown in FIG. 7, the method includes:
Step 1: NW sends AI/ML model structure candidate information to UE.

Implementation mode 1: The AI/ML model structure candidate information indicates the structure of the AI/ML model, which at least indicates a type of the model, and/or layer number/node number, and/or connection mode between layers, and/or connection mode between nodes.

An indication mode for the AI/ML model structure candidate information indicating the structure of the AI/ML model can be referred to the indication mode for the model structure information to indicate the structure of the AI/ML model in the first embodiment.

Implementation mode 2: the model structure candidate information is an ID of the AI/ML model structure. The model structure corresponding to the ID of the model structure is predefined by the protocol, or is determined by negotiation between manufacturers, or is indicated by the NW. The method for indicating the model structure by the ID of the model structure refers to the method for indicating the model structure by the "field/domain/sub-ID of the model ID" in the first embodiment, which will not be repeated here.

In some embodiments, the model structure candidate information includes an AI/ML model structure list.

Step 2: the UE feeds back a model structure that the UE can support among the model structures indicated by the model structure candidate information.

For example, an ID of a supported candidate model structure is fed back, or an index corresponding to a supported model structure in the candidate model structure list is fed back.

It is to be noted that it is possible that the UE does not support any candidate model structure, and in this case the UE feedbacks that it does not support any candidate model structure. In this case, the NW does not perform the following step 3.

Step 3: the NW transfers the AI/ML model (i.e., the target AI/ML model) to the UE. The model structure of the AI/ML model is a model structure that can be supported by the UE.

In some embodiments, before the NW transfers the AI/ML model to the UE, model identification from the NW to the UE is also initiated, and the model identification from the NW to the UE at least indicates applicable conditions of the AI/ML model transferred by the NW to the UE.

In the above solutions of the embodiment of the present disclosure, by sending model indication information, it enables the network side device to identify the AI/ML model structure supported by the UE, so that the NW can transfer a model of the AI/ML model structure supported by the UE, thereby reducing the complexity of the UE and making it possible for the NW to transfer the AI/ML model to the UE, which allows the UE to use the AI/ML model trained by the NW and adapted to the NW environment, thereby improving the performance of the communication system.

As shown in FIG. 8, one embodiment of the present disclosure further provides a model information transferring method, which is applied to a network side device, including:
Step 801: obtaining model indication information, where the model indication information is used to indicate an artificial intelligence or machine learning (AI/ML) model structure supported by the UE.

In the embodiment of the present disclosure, the above model indication information may directly indicate the AI/ML model structure supported by the UE, for example, directly indicating model structure information of the AI/ML model supported by the UE, or may indirectly indicate the AI/ML model structure supported by the UE, for example, indirectly indicating the AI/ML model structure supported by the UE by indicating the AI/ML model supported by the UE, for another example, indirectly indicating the AI/ML model structure supported by the UE by indicating an identifier of an AI/ML model or an identifier of an AI/ML model structure supported by the UE or by indicating a reference AI/ML model.

Step 802: determining AI/ML model structure supported by the UE according to the model indication information.

The model indication information enables the network side device to identify the AI/ML model structure supported by the UE, so that the NW can transfer a model of the AI/ML model structure supported by the UE, reducing the complexity of the UE and making it possible for the NW to transfer the AI/ML model to the UE, which allows the UE to use the AI/ML model trained by the NW and adapted to the NW environment, thereby improving the performance of the communication system.

In some embodiments, the model indication information includes at least one of the following items.
model identifier;
meta information of the model, where the meta information is description information of the model and includes model structure information and/or model structure identifier;
model structure identifier;
model structure information;
AI/ML reference model.

The model indication information has been described in detail in the method embodiment on the UE side and will not be repeated here.

In some embodiments, the method of the embodiment of the present disclosure further includes:
sending candidate model information to the UE, where the candidate model information includes at least one of a model identifier, meta information, a model structure identifier, and model structure information of at least one candidate AI/ML model, and/or includes at least one candidate AI/ML reference model.

In the embodiment of the present disclosure, the network side device sends candidate model information to the UE, and the UE selects the candidate model information corresponding to the AI/ML model supported by the UE from the candidate model information as the model indication information, thereby achieving the purpose of enabling the network side device to obtain the AI/ML model structure supported by the UE through the model indication information.

In some embodiments, the model structure information indicates at least one of the following:
type, layer number, node number, connection mode between layers, and connection mode between nodes.

In some embodiments, the model identifier carries model structure information.

Alternatively, there is a corresponding relationship between the model identifier and the model structure information.

In some embodiments, different fields or different domains or different sub-IDs in the model identifier are used to indicate different structural parameters in the model structure information.

Alternatively, a specific field or a specific domain or a specific sub-ID in the model identifier is used to indicate a combination of structural parameters in the model structure information.

In some embodiments, the model structure identifier carries model structure information.

Alternatively, there is a corresponding relationship between the model structure identifier and the model structure information.

In some embodiments, different fields or different domains or different sub-IDs in the model structure identifier are used to indicate different structural parameters in the model structure information.

Alternatively, a specific field or a specific domain or a specific sub-ID in the model structure identifier is used to indicate a combination of structure parameters in the model structure information.

The above model identifier or model structure identifier has been described in detail in the method embodiment on the UE side and will not be repeated here.

In some embodiments, the method of the embodiment of the present disclosure further includes:
sending a target AI/ML model to the UE, where a structure of the target AI/ML model is a structure of the AI/ML model supported by the UE.

Here, the network side device transfers the above target AI/ML model to the UE, so that the UE can use the AI/ML model trained by the NW and adapted to the NW environment, thereby improving the performance of the communication system.

It is to be noted that the method performed by the network side device is a method corresponding to the method performed by the above UE. The specific interaction process between the two has been described in detail in the embodiment of the UE side and will not be repeated here.

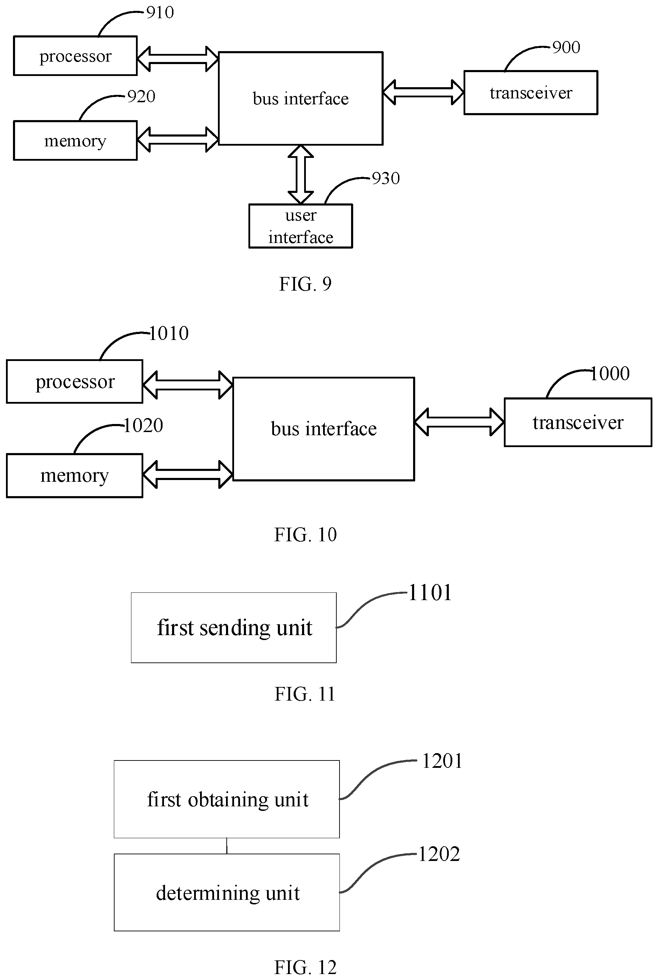

As shown in FIG. 9, one embodiment of the present disclosure provides a model information transferring device, which is applied to a UE and includes a memory 920, a transceiver 900, and a processor 910.

The memory 920 is used to store a computer program. The transceiver 900 is used to send and receive data under the control of the processor 910. The processor 910 is used to read the computer program in the memory 920 and perform the following operations:
sending model indication information, where the model indication information is used to indicate an artificial intelligence or machine learning (AI/ML) model structure supported by the UE.

In FIG. 9, a bus architecture may include any number of interconnected bus and bridge. Specifically, various circuits of one or more processors, which are represented by the processor 910, and one or more memories, which are represented by the memory 920, are linked together. The bus architecture may link various other circuits, such as a peripheral device, voltage regulator and a power management circuit together. These features are well known in this field; therefore, this disclosure does not make further description on these features. The bus interface provides an interface. The transceiver 900 may be multiple elements, including a transmitter and a receiver and provide units, which communicate with other devices on the transmission medium. The transmission medium includes radio channels, wired channels, optical cables, etc. For different UEs, a user interface 930 may be an interface that can be connected to external or internal devices. The connected devices include but are not limited to a small keyboard, a display, a speaker, a microphone, a joystick, etc.

The processor 910 is responsible for managing the bus architecture and the normal processing. The memory 920 may be used to store data used by the processor 910 for performing operations.

In some embodiments, the processor 910 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

In some embodiments, the model indication information includes at least one of the following items:
model identifier;
meta information of the model, where the meta information is description information of the model and includes model structure information and/or model structure identifier;
model structure identifier;
model structure information;
AI/ML reference model.

In some embodiments, the processor is further used to perform the following steps:
obtaining candidate model information sent by a network side device, where the candidate model information includes at least one of a model identifier, meta information, a model structure identifier and model structure information of at least one candidate AI/ML model, and/or includes at least one candidate AI/ML reference model;
selecting, in the candidate model information, the candidate model information corresponding to the AI/ML model supported by the UE, as the model indication information.

In some embodiments, the model structure information indicates at least one of the following:
type, layer number, node number, connection mode between layers, and connection mode between nodes.

In some embodiments, the model identifier carries model structure information.

Alternatively, there is a corresponding relationship between the model identifier and the model structure information.

In some embodiments, different fields or different domains or different sub-IDs in the model identifier are used to indicate different structural parameters in the model structure information.

Alternatively, a specific field or a specific domain or a specific sub-ID in the model identifier is used to indicate a combination of structural parameters in the model structure information.

In some embodiments, the model structure identifier carries model structure information.

Alternatively, there is a corresponding relationship between the model structure identifier and the model structure information.

In some embodiments, different fields or different domains or different sub-IDs in the model structure identifier are used to indicate different structural parameters in the model structure information.

Alternatively, a specific field or a specific domain or a specific sub-ID in the model structure identifier is used to indicate a combination of structure parameters in the model structure information.

In some embodiments, the processor is further used to perform the following steps:
obtaining a target AI/ML model transferred by the network side device, where a structure of the target AI/ML model is an AI/ML model structure supported by the UE.

It is to be noted here that the above device provided in the embodiment of the present disclosure can implement all the method steps implemented by the above method embodiment applied to the UE and can achieve the same technical effect. The parts and beneficial effects of this embodiment that are the same as the method embodiment will not be described in detail here.

As shown in FIG. 10, one embodiment of the present disclosure further provides a model information transferring device, which is applied to a network side device, and the device includes a memory 1020, a transceiver 1000, and a processor 1010.

The memory 1020 is used to store a computer program. The transceiver 1000 is used to send and receive data under the control of the processor. The processor 1010 is used to read the computer program in the memory and perform the following operations:
obtaining model indication information, where the model indication information is used to indicate an artificial intelligence or machine learning (AI/ML) model structure supported by the UE;
determining AI/ML model structure supported by the UE according to the model indication information.

In FIG. 10, a bus architecture may include any number of interconnected bus and bridge. Specifically, various circuits of one or more processors, which are represented by the processor 1010, and one or more memories, which are represented by the memory 1020, are linked together. The bus architecture may link various other circuits, such as a peripheral device, voltage regulator and a power management circuit together. These features are well known in this field; therefore, this disclosure does not make further description on these features. The bus interface provides an interface. The transceiver 1000 may be multiple elements, including a transmitter and a receiver and provide units, which communicate with other devices on the transmission medium. The transmission medium includes radio channels, wired channels, optical cables, etc. The processor 1010 is responsible for managing the bus architecture and the normal processing. The memory 1020 may be used to store data used by the processor 1010 for performing operations.

The processor 1010 may be a central processing unit (CPU), an application specific integrated circuit (ASIC), a field-programmable gate array (FPGA) or a complex programmable logic device (CPLD). The processor may also adopt multi-core architecture.

In some embodiments, the model indication information includes at least one of the following items:
model identifier;
meta information of the model, where the meta information is description information of the model and includes model structure information and/or model structure identifier;
model structure identifier;
model structure information;
AI/ML reference model.

In some embodiments, the processor is further used to perform the following steps:
sending candidate model information to the UE, where the candidate model information includes at least one of a model identifier, meta information, a model structure identifier, and model structure information of at least one candidate AI/ML model, and/or includes at least one candidate AI/ML reference model.

In some embodiments, the model structure information indicates at least one of the following:
type, layer number, node number, connection mode between layers, and connection mode between nodes.

In some embodiments, the model identifier carries model structure information.

Alternatively, there is a corresponding relationship between the model identifier and the model structure information.

In some embodiments, different fields or different domains or different sub-IDs in the model identifier are used to indicate different structural parameters in the model structure information.

Alternatively, a specific field or a specific domain or a specific sub-ID in the model identifier is used to indicate a combination of structural parameters in the model structure information.

In some embodiments, the model structure identifier carries model structure information.

Alternatively, there is a corresponding relationship between the model structure identifier and the model structure information.

In some embodiments, different fields or different domains or different sub-IDs in the model structure identifier are used to indicate different structural parameters in the model structure information.

Alternatively, a specific field or a specific domain or a specific sub-ID in the model structure identifier is used to indicate a combination of structure parameters in the model structure information.

In some embodiments, the processor is further used to perform the following steps:
sending a target AI/ML model to the UE, where a structure of the target AI/ML model is a structure of the AI/ML model supported by the UE.

It is to be noted here that the above device provided in the embodiment of the present disclosure can implement all the method steps implemented by the above method embodiment applied to the network side device, and can achieve the same technical effect. The parts and beneficial effects of this embodiment that are the same as the method embodiment will not be described in detail here.

As shown in FIG. 11, one embodiment of the present disclosure further provides a model information transferring device, which is applied to a UE and includes:
a first sending unit 1101 used to send model indication information, where the model indication information is used to indicate an artificial intelligence or machine learning (AI/ML) model structure supported by the UE.

In some embodiments, the model indication information includes at least one of the following items.
model identifier;
meta information of the model, where the meta information is description information of the model and includes model structure information and/or model structure identifier;
model structure identifier;
model structure information;
AI/ML reference model.

In some embodiments, the device of the embodiment of the present disclosure further includes:
a second obtaining unit, used to obtain, before the first sending unit sends the model indication information, candidate model information sent by a network side device, where the candidate model information includes at least one of a model identifier, meta information, a model structure identifier and model structure information of at least one candidate AI/ML model, and/or includes at least one candidate AI/ML reference model;
a selection unit used to select, in the candidate model information, the candidate model information corresponding to the AI/ML model supported by the UE, as the model indication information.

In some embodiments, the model structure information indicates at least one of the following:
type, layer number, node number, connection mode between layers, and connection mode between nodes.

In some embodiments, the model identifier carries model structure information.

Alternatively, there is a corresponding relationship between the model identifier and the model structure information.

In some embodiments, different fields or different domains or different sub-IDs in the model identifier are used to indicate different structural parameters in the model structure information.

Alternatively, a specific field or a specific domain or a specific sub-ID in the model identifier is used to indicate a combination of structural parameters in the model structure information.

In some embodiments, the model structure identifier carries model structure information.

Alternatively, there is a corresponding relationship between the model structure identifier and the model structure information.

In some embodiments, different fields or different domains or different sub-IDs in the model structure identifier are used to indicate different structural parameters in the model structure information.

Alternatively, a specific field or a specific domain or a specific sub-ID in the model structure identifier is used to indicate a combination of structure parameters in the model structure information.

In some embodiments, the device of the embodiment of the present disclosure further includes:
a third obtaining unit used to obtain a target AI/ML model transferred by the network side device after the first sending unit sends the model indication information, where a structure of the target AI/ML model is an AI/ML model structure supported by the UE.

It is to be noted here that the above device provided in the embodiment of the present disclosure can implement all the method steps implemented by the above method embodiment applied to the UE, and can achieve the same technical effect. The parts and beneficial effects of this embodiment that are the same as the method embodiment will not be described in detail here.

As shown in FIG. 12, one embodiment of the present disclosure further provides a model information transferring device, which is applied to a network side device, and the device includes:
a first obtaining unit 1201 used to obtain model indication information, where the model indication information is used to indicate an artificial intelligence or machine learning (AI/ML) model structure supported by the UE;
a determining unit 1202 used to determine AI/ML model structure supported by the UE according to the model indication information.

In some embodiments, the model indication information includes at least one of the following items.
model identifier;
meta information of the model, where the meta information is description information of the model and includes model structure information and/or model structure identifier;
model structure identifier;
model structure information;
AI/ML reference model.

In some embodiments, the device of the embodiment of the present disclosure further includes:
a second sending unit used to send candidate model information to the UE, where the candidate model information includes at least one of a model identifier, meta information, a model structure identifier, and model structure information of at least one candidate AI/ML model, and/or includes at least one candidate AI/ML reference model.

In some embodiments, the model structure information indicates at least one of the following:
type, layer number, node number, connection mode between layers, and connection mode between nodes.

In some embodiments, the model identifier carries model structure information.

Alternatively, there is a corresponding relationship between the model identifier and the model structure information.

In some embodiments, different fields or different domains or different sub-IDs in the model identifier are used to indicate different structural parameters in the model structure information.

Alternatively, a specific field or a specific domain or a specific sub-ID in the model identifier is used to indicate a combination of structural parameters in the model structure information.

In some embodiments, the model structure identifier carries model structure information.

Alternatively, there is a corresponding relationship between the model structure identifier and the model structure information.

In some embodiments, different fields or different domains or different sub-IDs in the model structure identifier are used to indicate different structural parameters in the model structure information.

Alternatively, a specific field or a specific domain or a specific sub-ID in the model structure identifier is used to indicate a combination of structure parameters in the model structure information.

In some embodiments, the device of the embodiment of the present disclosure further includes:
a third sending unit used to send a target AI/ML model to the UE, where a structure of the target AI/ML model is a structure of the AI/ML model supported by the UE.

It is to be noted here that the above device provided in the embodiment of the present disclosure can implement all the method steps implemented by the above method embodiment applied to the network side device, and can achieve the same technical effect. The parts and beneficial effects of this embodiment that are the same as the method embodiment will not be described in detail here.

It is to be noted that division of units in the embodiment of the present disclosure is exemplary, and is only a logical function division, and there may be another division manner in actual implementation. In addition, each functional unit in each embodiment of the present disclosure may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a processor-readable storage medium, which includes program instructions stored thereon. The program instructions are used to cause a processor to execute all the steps implemented in the above method embodiment on the UE, or cause the processor to execute all the steps implemented in the above method embodiment on the network side device, and can achieve the same technical effect. The parts and beneficial effects of this embodiment that are the same as the method embodiment will not be described in detail here

One embodiment of the present disclosure further provides a computer program product, including computer instructions. When the computer instructions are executed by a processor, the various processes of the method embodiment shown in FIG. 2 or FIG. 8 are implemented, and the same technical effect can be achieved, which will not be repeated here to avoid repetition.

The terminal device involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device (network side device) involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

Those skilled in the art should understand that the embodiments of the present disclosure may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

In addition, it is to be noted that in the device and method of the present disclosure, it is apparent that various components or steps may be decomposed and/or recombined. Such decomposition and/or recombination is regarded as equivalent solutions of the present disclosure. Further, the steps for executing the aforementioned series of processes may naturally be performed in the order described chronologically, but need not necessarily be performed in chronological order. Certain steps may be executed in parallel or independently of one another. Those of ordinary skill in the art will appreciate that all or any of the steps or components of the methods and device of the present disclosure may be implemented in any computing device (including processors, storage media, etc.) or network of computing devices, in the form of hardware, firmware, software, or a combination thereof. This can be achieved by those of ordinary skill in the art by applying their basic programming skills after reading the description of the present disclosure.

It is to be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (ASIC), or one or more microprocessors (Digital Signal Processor, DSP), or one or more field programmable gate arrays (FPGA), etc. As another example, when a module described above is implemented in the form of scheduling program codes by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present application are used to distinguish similar objects and are not necessarily used to describe a specific order or sequence. It is to be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. A model information transferring method, applied to a user equipment (UE), comprising:
sending model indication information; wherein the model indication information is used to indicate an artificial intelligence or machine learning (AI/ML) model structure supported by the UE.

2. The method according to claim 1, wherein the model indication information includes at least one of the following:
a model identifier;
meta information of a model, wherein the meta information is description information of the model and includes model structure information and/or model structure identifier;
a model structure identifier;
model structure information; and
an AI/ML reference model.

3. The method according to claim 1, wherein before sending model indication information, the method further includes:
obtaining candidate model information sent by a network side device, wherein the candidate model information includes at least one of a model identifier, meta information, a model structure identifier and model structure information of at least one candidate AI/ML model, and/or includes at least one candidate AI/ML reference model;
selecting, in the candidate model information, the candidate model information corresponding to the AI/ML model supported by the UE, as the model indication information.

4. The method according to claim 2 or 3, wherein the model structure information indicates at least one of the following:
type, layer number, node number, connection mode between layers, and connection mode between nodes.

5. The method according to claim 2 or 3, wherein the model identifier carries model structure information;
or, there is a corresponding relationship between the model identifier and the model structure information.

6. The method according to claim 5, wherein different fields or different domains or different sub-identifiers (IDs) in the model identifier are used to indicate different structural parameters in the model structure information;
or, a specific field or a specific domain or a specific sub-ID in the model identifier is used to indicate a combination of structural parameters in the model structure information.

7. The method according to claim 2 or 3, wherein the model structure identifier carries model structure information;
or, there is a corresponding relationship between the model structure identifier and the model structure information.

8. The method according to claim 7, wherein different fields or different domains or different sub-identifiers (IDs) in the model structure identifier are used to indicate different structural parameters in the model structure information;
or, a specific field or a specific domain or a specific sub-ID in the model structure identifier is used to indicate a combination of structure parameters in the model structure information.

9. The method according to claim 1, wherein after sending model indication information, the method further includes:
obtaining a target AI/ML model transferred by the network side device; wherein a structure of the target AI/ML model is an AI/ML model structure supported by the UE.

10. A model information transferring method, applied to a network side device, comprising:
obtaining model indication information; wherein the model indication information is used to indicate an artificial intelligence or machine learning (AI/ML) model structure supported by a user equipment (UE);
determining an AI/ML model structure supported by the UE according to the model indication information.

11. The method according to claim 10, wherein the model indication information includes at least one of the following:
a model identifier;
meta information of a model, wherein the meta information is description information of the model and includes model structure information and/or a model structure identifier;
a model structure identifier;
model structure information; and
an AI/ML reference model.

12. The method according to claim 10, wherein the method further includes:
sending candidate model information to the UE, wherein the candidate model information includes at least one of a model identifier, meta information, a model structure identifier, and model structure information of at least one candidate AI/ML model, and/or includes at least one candidate AI/ML reference model.

13. The method according to claim 11 or 12, wherein the model structure information indicates at least one of the following:
type, layer number, node number, connection mode between layers, and connection mode between nodes.

14. The method according to claim 11 or 12, wherein the model identifier carries model structure information;
or, there is a corresponding relationship between the model identifier and the model structure information.

15. The method according to claim 14, wherein different fields or different domains or different sub-identifiers (IDs) in the model identifier are used to indicate different structural parameters in the model structure information;
or, a specific field or a specific domain or a specific sub-ID in the model identifier is used to indicate a combination of structural parameters in the model structure information.

16. The method according to claim 11 or 12, wherein the model structure identifier carries model structure information;
or, there is a corresponding relationship between the model structure identifier and the model structure information.

17. The method according to claim 16, wherein different fields or different domains or different sub-identifiers (IDs) in the model structure identifier are used to indicate different structural parameters in the model structure information;
or, a specific field or a specific domain or a specific sub-ID in the model structure identifier is used to indicate a combination of structure parameters in the model structure information.

18. The method according to claim 10, wherein the method further includes:
sending a target AI/ML model to the UE, wherein a structure of the target AI/ML model is a structure of the AI/ML model supported by the UE.

19. A model information transferring device, comprising: a memory, a transceiver, and a processor;
wherein the memory is used to store a computer program; the transceiver is used to send and receive data under control of the processor; and the processor is used to read the computer program in the memory and perform the following operations:
sending model indication information; wherein the model indication information is used to indicate an artificial intelligence or machine learning (AI/ML) model structure supported by a user equipment (UE).

20. A model information transferring device, comprising: a memory, a transceiver, and a processor;
wherein the memory is used to store a computer program; the transceiver is sued to send and receive data under control of the processor; and the processor is used to read the computer program in the memory and perform the following operations:
obtaining model indication information, wherein the model indication information is used to indicate an artificial intelligence or machine learning (AI/ML) model structure supported by a user equipment (UE);
determining an AI/ML model structure supported by the UE according to the model indication information.

21. A model information transferring device, comprising:
a first sending unit configured to send model indication information, wherein the model indication information is used to indicate an artificial intelligence or machine learning (AI/ML) model structure supported by a user equipment (UE).

22. A model information transferring device, comprising:
a first obtaining unit configured to obtain model indication information, wherein the model indication information is used to indicate an artificial intelligence or machine learning (AI/ML) model structure supported by a user equipment (UE);
a determination unit configured to determine an AI/ML model structure supported by the UE according to the model indication information.

23. A processor-readable storage medium, comprising a computer program stored thereon; wherein the computer program is used to causes a processor to perform steps of the model information transferring method according to any one of claims 1 to 9, or to perform steps of the model information transferring method according to any one of claims 10 to 18.

24. A computer program product, comprising computer instructions; wherein the computer instructions, when executed by a processor, causes the processor to perform steps of the model information transferring method according to any one of claims 1 to 9, or to perform steps of the model information transferring method according to any one of claims 10 to 18.
